# EUROPEAN PATENT SPECIFICATION

(11) **EP 2 035 520 B1**
(45) Date of publication and mention of the grant of the patent: **27.01.2010**
(21) Application number: 07726172.5
(22) Date of filing: 28.06.2007
(51) Int. Cl.: C09J 7/02, G09F 3/10, B32B 7/02, B32B 7/12

(54) **EVENT-SENSING LABEL**
EXTERNE VORGÄNGE ERFASSENDES ETIKETT
MARQUEUR DE DETECTION D'UN ÉVENEMENT

(30) Priority: 30.06.2006 US 817980 P
(43) Date of publication of application: 18.03.2009
(73) Proprietor: Aardex Ltd., 6302 Zug (CH)
(72) Inventor: MÉTRY, Jean-Michel, CH-1950 Sion (CH)
(74) Representative: Wibbelmann, Jobst
(86) International application number: PCT/EP2007/005741
(87) International publication number: WO 2008/000479

(56) References cited:
- EP-A- 0 574 786
- WO-A-03/068137
- WO-A-2004/111338
- WO-A-2006/050863
- US-A- 3 689 810

## Description

### FIELD OF THE INVENTION

This invention relates to a label which can provide an electrical signal indicative of the status of the object to which the label is affixed. In preferred embodiments it relates to the use of such labels in connection with dispensers of unit dose medications having a desired dispensing regimen and, in particular, to the use of such labels to sense medication events with such dispensers which gather and process information on patient compliance with the desired dispensing regimen.

### BACKGROUND OF THE INVENTION

There are numerous settings where it is advantageous to have an indication of the status of an object. For example, there are settings where it is of importance to know if an object is intact or if it has been tampered with or accessed, and the time at which the tampering or access occurred. These settings include security labeling or tamper-proof packages for foods or beverages or pharmaceuticals. It is possible to incorporate devices which will provide this security and this information directly into the packaging for the objects. However, there are many times when it is inconvenient to do this or where a variety of different packaging is presented such that a great variety of devices would be needed to accommodate the range of packages.

In the field of pharmaceuticals there is a growing appreciation that monitoring the timeliness and consistency of medication administration can lead to better patient compliance with desired dosing plans and to a better understanding of the drug's effectiveness on a patient-by-patient basis. Today, this sort of information is gathered and stored electronically in virtually all cases. In these settings there is a need to have an easy-to-use type of detector to note the drug dispensing events. It is also helpful if that detector can be relatively universal and readily adapted to detect dispensing from a range of drug containers and drug presentation formats. It should also be simple of construction and robust and not prone to the generation of "false positive" dose detection errors in which a false indication of dosing is generated. The present invention satisfies all of these needs.

There is a special interest in the application of this invention to the field of pharmaceuticals and the assurance of the purity and proper administration of drug dosage forms. However, this invention can find application far beyond this field.

### SUMMARY OF THE INVENTION

It is a principal object of this invention to provide a conductive label capable of providing a changed electrical signal as a function of whether or not or how many times an object labeled with the label has been physically accessed or otherwise manipulated.

It is an additional object to provide a system including such a label which system can sense and employ information about whether or not or how many times an object labeled with the label has been accessed or otherwise manipulated.

It is an additional object to provide such a label and such a system which can be employed in medication compliance monitoring systems.

A further object of the invention is to provide such a label and system incorporating this label which can be employed in improved medication compliance monitoring systems that can gather data concerning patient dosing of medications and store and optionally communicate the data concerning stored medication dosing events.

Thus, in one aspect this invention enables an electrical-signal-providing label for attachment to an object such as a container and suitable for detecting one or more manual events, such as physical accessing involving the object and a system including such a label for using the detection of the event that the label provides. The label includes a stack of layers and an adhesive coating as defined in claim 1. In will also commonly include a disposable protective layer over the adhesive coating that is removed prior to affixing the label to the object. The stack of layers includes at least three layers. The first layer is a flexible, conformable layer made of or coated with an electrically conductive or semiconductive material. The second layer is made of a flexible, deformable, and compressible material. This second layer may be nonconductive or it may be electrically conductive but less conductive than the first layer. The third layer is typically similar to or like the first layer. It is flexible and conformable and is made of or contains a coating of flexible, conformable, electrically conductive or semi conductive material. The second layer physically and electrically separates the first and third layers and creates a characteristic electrical "signatures" for the three layer stack which varies if and when the second layer is deformed or compressed. This electrical "signature" can be a conductivity value, a resistance value, a capacitance value or an induction value measured across the first and third layers and the intermediate second layer with and without deformation or compression. The first and third layers each have at least one electrical contact point to which electrical connection can be made for purposes of detecting the electrical signature and/or the variations in it measured across the three layers which occur when the object to which the label is affixed undergoes manipulation or access and the second layer is deformed or compressed.

If the intermediate second layer is completely resilient such that it returns to tits original configuration after manipulation or deformation, then the signature should essentially return to its original value, as well. In this case, if multiple events are being detected, they may each present a similar signature from the baseline signature value. This will result in a change in signature which is not additive as multiple events are detected. If, however, the second layer is not completely resilient such that it does not essentially completely return to its configuration after manipulation or deformation each successive deformation or compression may produce a change in signature which is, at least in part, additive with the original value and thus distinguishable from the initial change in signature.

In some embodiments of the invention it will be desired to detect a series of several events occurring over an area and it may be desired to identify which of the several events is being detected. This could occur, for example, if one were detecting the delivery of a series of doses of two or more drugs from a single membrane type array such as found with oral contraceptives. Often the two-connection configuration described above, with one connection being made to the conductive first layer and the second connection being made to the conductive third layer can provide this information with the compression or deformation of certain areas of the second layer yielding distinguishable signatures as compared to compression or deformation of other areas of the second layer. Alternatively, it may be helpful to have one or more, say one to four, additional connections to one or both of the first and third layers with the extra connection or connections being spaced apart from the first and second connections. It will be seen that different signatures are detected across various combinations of these multiple connections and that these different signatures will distinguish among compressions/distortions of different locations in the second layer and thus provide information concerning the particular event being detected, such as, for example in the oral contraceptive setting just mentioned, the particular drug being dispensed.

The label includes an adhesive coating which is suitable for adhering the label made up of the stack of layers to the object in a location selected to receive a second-layer-deforming or compressing force when the object is accessed or otherwise manipulated.

This label can be combined with an electrical detection circuit which detects variations in the electrical signature of the label. In one representative embodiment this circuit can feed a first fed electrical signal across the first and third layers. The circuit can then detect a first output signal across the first and third layers with the label in place attached to the object and no access to the object having been achieved. This provides a base electrical value for the signature which the detection circuit can read. Thereafter the circuit feeds a second fed electrical signal across the first and third layers with the label in place and detects a second output signal across the first and third layers. The first and second output signals are the same or at least similar to each other if no access to the object has been achieved. The first and second output signals differ from one another in a characteristic way if the second layer is being or has been compressed or deformed as a result of the object having been manipulated or accessed The circuit can include processors, indicators, memories, data transmitters and the like which can gather, store, and display or transmit information concerning manipulation or accessing of the object based upon the detected similarities or differences between the first and second output signals provided by these labels.

In a favored aspect, this invention provides an electrical-signal-providing label system for detecting the dispensing of one or more doses of medication from a container to a patient. In this aspect the label as just described is suitably associated with, e.g. adhered to, a medication dose container or as part of packaging for the dose or doses of medication . The label is located such that proper manipulation of the medication container, for example the opening or opening and closing of the container, the working of a child-proof closure, the pushing of a lever to actuate an inhaler or the "bursting" of a pill from a "blister pack" or other flat format packaging will provide the needed second-layer-compressing force which alters the electrical signature and provides the indication of accessing or other manipulation of the medication dispenser. In most applications, the label is affixed to the container or packaging at this desired operative location. It will be appreciated that it is desirable to choose the location for the label to maximize the detection of actual accessing or manipulation events and to minimize the detection of spurious events.

In a further aspect the label of this invention can detect a series of accessing or manipulation events involving an object or a series of objects. In this case the label can remain as just described. The detection circuit can remain essentially the same, as well. In this case, the label is placed on the object in a location selected to receive a second-layer-compressing or distorting force each time the object is accessed and the electrical detection circuit is capable of gathering information in the form of a series of electrical signals. In this case, each time the object is accessed or manipulated, additional second-layer-compressive or distortive forces are applied to the second layer and the output signal (i.e. electrical signature of the label) is altered in a characteristic manner or in characteristic manners which can be detected and used as a record of the one or more accessings or manipulations. In preferred embodiments, this can be used to detect the delivery of a series of doses of a medication. The accessing of different objects can give rise to different signatures. Accordingly, in this aspect, it may be advantageous to employ a detection circuit which can distinguish among the different signatures.

It will be appreciated by those of skill in the art that this label and label-detector combination has the potential to be quite universal in size and applicability. It will be further recognized that it can be used with a wide range of existing packages for objects and especially for the full range of existing medication dosage formats and dosage forms. The label does not involve complicated wire or printed traces but rather employs a robust stack of substantially uniform simple layered materials which is simply added to (adhered to) existing drug packaging. There is no reason to believe that it will not serve well with additional packaging such as new drug dosage forms or new dosage form containers as they are developed hereafter.

### DETAILED DESCRIPTION OF THE INVENTION

### BRIEF DESCRIPTION OF THE DRAWINGS

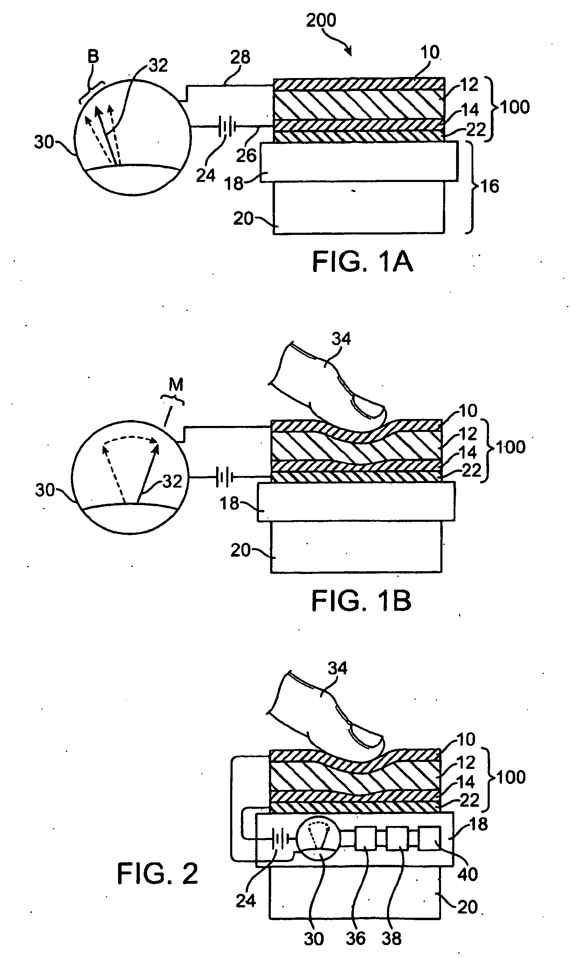

Figures 1A and 1B are a pair of schematic, partially cross-sectional views of an event-sensing label and its combination with a detector system according to the present invention used with a container. In Figure 1A the label is shown before the sensed event takes place. In Figure 1B the label is shown as the sensed event is taking place.

Figure 2 is a schematic, partially cross-sectional view of an event-sensing label and its combination with a detector system according to the present invention and a container depicting schematically the placement of the detector circuitry into the lid of the container.

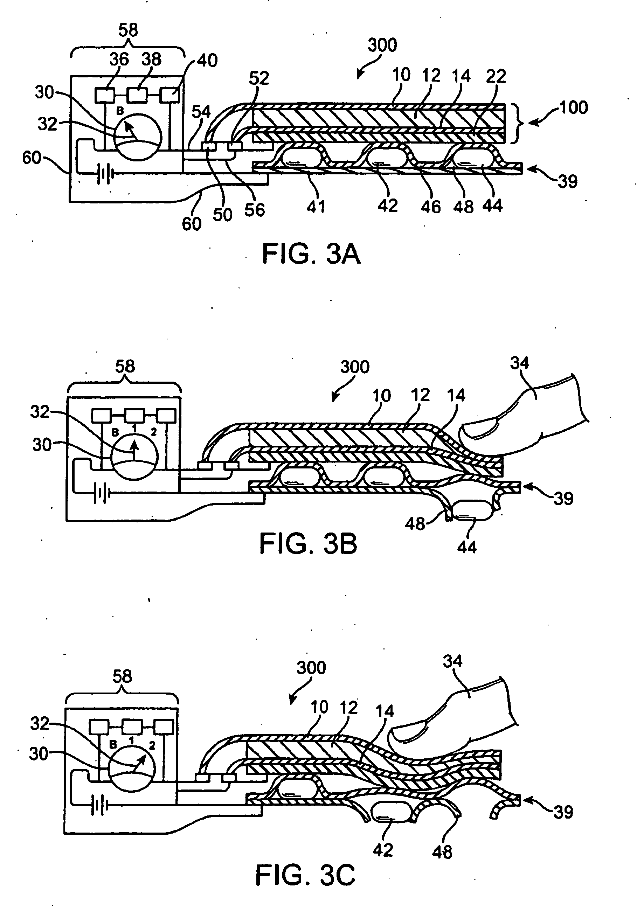

Figures 3A, 3B and 3C are three schematic, partially cross-sectional views of an event-sensing label and its combination with a detector system according to the present invention used with a conventional blister pack. In Figure 3A the label is shown before any sensed events take place. In Figure 3B the label is shown as a first sensed event is taking place. In Figure 3C the label is shown as a second sensed event is taking place.

### DESCRIPTION OF PREFERRED EMBODIMENTS

Referring to Figures 1 and 2, a label 100 and overall system 200 are shown. As the term "label" connotes, the device 100 is substantially two-dimensional , having a thickness that is relatively small as compared to its length and width. Label 100 includes a first layer 10, a second layer 12 and a third layer 14. First layer 10 and third layer 14 are each a conductive or semiconductive layer. Preferably, they are each layers having a conductivity of at least about 10⁻³S/M. Materials having a conductivity of from 10⁻² to 10⁶ S/M are preferred.) As this range of conductivities reflects, these layers 10 and 14 can be layers of conductive or semiconductive polymers or they can be conductive or semiconductive metallic layers such as an aluminum, copper, or silver layer. They can also be conductive and semiconductive inorganic compounds such as conductive or semiconductive metal oxides and sulfides. They can also be formed of conductive or semiconductive organic polymers. The conductive first and third layers 10 and 14 can be composed entirely or substantially of such conductive materials and may be applied directly onto opposing sides-of the intermediate layer 12 such as by printing, by coating with a solution of the material, by chemical deposition such as by vapor depositing or sputtering. The layers 10 and 14 themselves can be made up a conductive layer and a substrate, most commonly a plastic substrate. Metallized polyamides such as metallized "nylon" and metallized polyesters such as polyethyleneterephthalate ("metallized Mylar") are examples of commercially-available plastic substrates bearing a conductive metal layer.

If a substrate material is used, it is generally preferred to arrange the layers such that the substrate is placed away from the middle ("second") layer 12 and not between the middle layer 12 and the-conductive coating of either of the conductive first and third layers 10 and 14. The thickness of these first and third layers is not critical and can range from a nanometer or so in the case of directly-deposited layers without a substrate to up to 50 µm (microns) or so when including a plastic substrate which typically will be in the 5-50 µm (micron) range of thickness. If substrated conductive layers 10 and 14 are used, they need to be fastened to the intermediate layer 12. This can be carried out using adhesives or thermal lamination methods. What is important is that these layers 10, 12 and 14 be robust and flexible and conformable to the object to which the label is attached.

The second layer 12 is formed from a material which may be an insulator or a semiconductor or conductor of lower conductivity than the first and third layers 10 and 14, for example having a conductivity that is from 1 x 10⁻² to 1 x 10⁻⁶ times the conductivity of the first and third layers 10 and 14. This layer 12 should have a substantial thickness, for example from about a few (5) microns to 1 or 2 millimeters and particularly from 10 µm (microns) to 1 millimeter. This layer 12 separates the first and third layers 10 and 14. The material of layer 12 should be-deformable and compressible, such as resilient foam or plasticized polymer. It can be an organic polymer foam or a plasticized organic polymer sheet As noted, at times it is desired to have a degree of electrical conductivity in layer 12. This conductivity can be imparted to the material of later 12 by incorporating conductive or semiconductive organic polymers or liquids into the material of layer 12 or by incorporating conductive or semiconductive particles such as carbon or metal particles into the material of layer 12.

The relationship among these three layers, with a pair of conductive layers 10 and 14 separated by a deformable compressible middle layer 12 creates a characterizable electrical signature for the label 100. That is, there is a characteristic resistance, a characteristic conductance, a characteristic capacitance and the like in label 100 when it is applied to the object being monitored which can be measured across layers 10 and 14. When a force or pressure is applied to the three layer stack, this force can deform and compress at least in part the middle layer 12. This compression or deformation will have the effect of altering the electrical characteristics or signature of the label 100. This altering will be observed most commonly as decreasing the resistance, increasing the conductivity and changing the capacitance measured across layers 10 and 14. If the layer 12 is conductive or semiconductive, this will typically reduce layer 12's resistance or increase its conductivity. If layer 12 is substantially insulative, the compression or deformation will alter the capacitance measured across layers 10 and 14.

The labels of this invention generally can include a number of conventional additional label components as well. They can include printing on their outer surface. They can include a substrate or backing on their inner surface. This is present to provide mechanical strength to the label. They can include a layer of adhesive (shown as 22 on Figure 1), most commonly a pressure-sensitive adhesive on their inner surface or on the inner surface of the substrate or backing, if present to adhere the label to the object. They can also include a removable secondary backing sheet common to virtually all pressure sensitive-adhesive labels which covers the adhesive layer before use to protect it and which is stripped away to expose the layer of adhesive just before the label is applied to the object.

In Figure 1A, a label 100 is shown attached to container 16 made up of cap 18 and body 20 with adhesive layer 22. When a current or voltage is fed across layers 10 and 14 using power source 24 and conductors 26 and 28, a signature signal, which can be based upon resistance, conductivity, current, capacitance, etc, is detected and measured by detector 30, shown schematically and representationally as meter 30. Meter 30 reads a value for the electrical signature that is depicted in the drawing as falling within a characteristic base range "B" as shown by the position of meter needle 32. This characteristic signature range takes into account standard variation that would be caused by the environment in which the system is placed, for example variable conditions such as temperature and humidity, movement of the system itself and casual handling of the container 16 with the label 100 attached.

In Figure 1B, a finger 34 is seem pushing down on label 100. This could be done to access a freshness or pressure seal integrity button (not shown) under label 100 on the top 18 of container 16. This freshness or pressure seal integrity button is the type of button which is resilient and flexes in and out when depressed when the container is intact and the container's internal atmosphere is under pressure. Such a button does not exhibit resiliency and is immovable if the container seal has been broken and the container's pressure released. As finger 34 pushes down on label 100 it distorts and collapses layer 12 to a characteristic extent. There could be a different characteristic degree of collapse depending upon whether or not the freshness and security seal was resilient or not resilient. This collapse or distortion of layer 12 causes a change in the electrical signal or signature measured by detector 30. This is shown in Figure 1B by the movement of needle 32 to a value "M" which is distinguishable by detector 30 from value "B".

Thus, label 100 provides an electrical indication as to whether of not the freshness or seal integrity button was accessed. In a simple manual operation of the device, an operator could note the signature of the label, in this case the amount of needle deflection, and write down whether the deflection indicated an intact seal or a ruptured seal and the time of the notation. Alternatively, in a more automated embodiment, the signature could be determined automatically and stored in a computer memory along with information concerning the time and date of the accessing.

As shown in Figure 2, in another form of detector, the power source 24 and detector 30 could be incorporated into the cap 18 of the container 16 with the label 100 still on the outside of cap 18 in a position where it would be contacted in a characteristic way which would distort and or compress layer 12 each time the object (freshness button or seal integrity button) was accessed. The cap could contain additional electronics such as clock 36, memory 38 and signaling unit 40 which could gather and store and transmit information concerning the integrity of the package, based upon the contacting of the freshness button through the layer 100 as well as the time of the contacting, thus producing a record of the integrity of the package over time.

It will be appreciated that the label can be placed on container 16 in a number of alternate locations or could be used to provide a range of indications of manipulation besides that just described. For example, if container 16 is a drug container and cap 18 is a "child proof' cap which requires a downward force to unlatch, label 100, placed as shown, could give an indication of each time the cap 18 is depressed to open the container 16. This could provide a record of when the patient removed doses of drug from the container 16. Alternatively, the label could be wrapped and affixed circumferentially around the cap 18. If cap 18 was a security closure which required a pinching or tight grasping to activate, the force of the pinching or grasping could be used to distort or compress layer 12 and generate an electronic signature change measured across layers 10 and 14 as an indication of accessing of the contents of the container 18. Again, this signal or signature change could be stored or used as desired.

As shown in Figures 3A-C, the label of this invention 100 can be used in overall system 300 in conjunction with a conventional blister package 39 of the type used to dispense medication unit dosage forms (pills, capsules, etc) and also to dispense other small objects such as bolts, automotive parts, hardware and the like. As previously discussed, label 100 includes conductive layers 10 and 14 separated by compressible/distortable spacer layer 12. Label 100 is adhered to blister pack 39 by adhesive layer 22. Blister pack 39 contains a plurality of objects 41, 42 and 44, individually packed between flexible layer 46 and frangible flexible layer 48. Conductive layers 10 and 14 are electrically coupled via electrical contacts 50 and 52 and conductors 54 and 56 to the detector 58 which is shown enclosed within housing 60. Detector 58 includes meter 30 with needle 32 which is depicted to represent generically any type of detector which would register the electrical signature of the label 100 when layers 10 and 14 are connected into the detector circuit and would register changes in this signature when layer 12 is compressed or distorted. The detector 58 further includes other components such as the timer, memory and communication components identified as 36, 38 and 40 and previously discussed.

As depicted in Figure 3A, when all of the objects are present in blister pack 39 and no distortive or compressive force is being applied to label 100, meter 30 and needle 32 register a "B" or base value for the electrical signature of label 100.

In Figure 3B, finger 34 is seen pushing down on label 100. thus applying a layer 12-distorting force to label 100. This distorting force is being transmitted through to blister pack 39 where it is sufficient to push object (pill) 44 through layer 48 for dispensing to the user. As this happens, the electrical signature detected by meter 30 and needle 32 changes to a value "1". This value is the signature characteristic of the dispensing of a first object 44 from the blister pack 39. The detector 58 can create a record of this event including information as to when it occurred.

In Figure 3C, finger 34 can be seen repeating the expressing of an object out of the blister pack 39. In this case, object (pill) 42 is being dispensed to the user. Again, the force needed to express the object 42 through frangible layer 48 is also sufficient to further compress and/or deform compressible/ deformable layer 12 in label 100. This compression/distortion, taken together with some or all of the compression/distortion that occurred when object 44 was removed, leads to yet a new electrical environment within label 100 which leads to a yet different signature signal being sent and detected by detector 58. This new signal is shown on meter 30 as needle 32 position "2".

Thus, using the label 100 it is possible to detect not only single events but also multiple events, whether simultaneous multiple events or sequential multiple events.

It can be seen that in system 300, the label 100, the blister pack 39 and the detector 58 can all be joined into a single unit. This enables a standard blister pack to be used. Since the label 100 does not rely upon the breaking of breakable fine wires, printed traces or the like other traces to provide the signal of object access, the alignment of the label and the blister is not critical. This is an advantage that has universal application. It makes it possible for the label and the object (blister pack, container, etc) that the label is monitoring to be quickly assembled in the field away from complicated assembly equipment.

The detector 58 shown in Figure 3 will typically continuously or periodically monitor the electrical signals from the label 100. When a change in one or more of these signals is detected it is transmitted to a central processor including components 36, 38 and 40 as previously described. The central processor reads the appropriate time associated with the detected signal as obtained from, a time keeping unit 36, and this time information related to the accessing event is stored in memory 38. The time resolution of this event record is given by the accuracy of the time-keeping circuit and the frequency with which the central processor inspects the digital signals from the detector. The time resolution should be such as to lead to meaningful data concerning the accessing events. For example to give information as to a patient's compliance with a drug dosing regimen or lack thereof.

In one embodiment, the conductive layers 10 and/or 14 or the less conductive compressible/deformable layer 12 are implemented using one or more electrically-conducting organic materials such as the conductive organic polymer marketed as Baytron^{™}.

An advantage of conductive polymers in this application is that they can be applied as thin-film sheets of conductive/semiconductive polymer or they can be cast in place as such layers.

In preferred embodiments, some or all of the layers 12, 14 and/or 16 make use of organic conductors and/or organic semiconductors. Conductive polymers include conjugated polymers. These are described, for example at, Chemical Innovation, Vol. 30, No.1, 14-22 (April 2000), and in the report entitled "P-235 Conductive Polymers" by Mel Schlecter, published October 2003 by Business Communications Company, Inc. Representative conductive polymers include poly(aniline), poly(acetylene), poly(N-vinylcarbazole), poly(pyrrole), poly(thiophene), poly(2-vinylpyridine), poly(p-phenylenevinylene), poly(naphthalene) and related derivatives. Some of the conductors can be formed of carbon fibers and the like, or can incorporate carbon fibers or particles if desired.

The labels of this invention include a layer of adhesive 22. This adhesive is commonly a pressure sensitive adhesive such as a polyolefin or polyacrylate and can be present with or without a substrate or backing layer. A substrate, if present, can be formed of common flexible film-forming structural polymers such as polyethyleneterephthalate and other polyesters, olefin polymers such as polyethylene, aromatic polymers such as polystyrene and the like.

In the systems of this invention the processor, which is usually physically connected to the detector through the flexible substrate and electrically through carious conductive circuitry on the substrate, provides the functional electronic building blocks that are required for at least the reception of the detected dispensing event signals and generally the storage of this event information and the transmission of the information, as detected or after storage, to an outside system.

In these systems, the processor can include signal comparators for detecting these signal modifications, clocking and absolute time-keeping circuits, a central processor that monitors the detector signaling circuits and stores detected dispensing events together with their time in appropriate memory cells, a wireless radio-frequency or optical communication interface for transmitting all this information to an outside system, optional sensor modules such as temperature, touch sensing or other devices for patient input, an optional display or enunciator module for providing visual or audible feedback to the patient, all powered by the power-supply such as a battery or photovoltaic cell, with this detector and processor.

This processor can also provide an information retrieval and retransmission system that can read the data provided by the detector and transmit it either to the medication-prescribing physician or to an organization that collects and compiles such data as indications of the times at which medication doses were taken in order to present the data to the medication-prescribing physician in appropriate form.

This detection can be specific for individual dosage forms or it can be based on the overall collection of dosage forms, depending upon whether or not information concerning specific individual doses is needed as would likely be the case if the system were monitoring the dispensing of doses of more than one drug with a single device. The processor obtains this information, combines it with an absolute or relative time stamp that is received from a clock generator and timing circuit, and the combined information can be stored in a digital memory.

The system can also contain a wireless communication module, with which the central processor can communicate the medication removal events to the information retrieval and retransmission system. This process is implemented either as a radio-frequency link or an optical link, preferentially using infrared light as known from television remote controls.

Once the power supply is connected to the system, the clock generation module begins to operate and the central circuit is initialized. The absolute timing circuit either resets itself to zero before running continuously, or it can obtain the correct, absolute time from a radio station emitting standard time signals, such as the long-wave DCF77 time signal (77.5 kHz) provided by the German Physikalisch-Technische Bundesanstalt PTB or the WWVB time signal (60 kHz) provided by the US National Institute of Standards and Technology NIST.

The medication removal events together with their appropriate time stamps are most commonly stored by the central processor in the digital memory. This information can be read out and transmitted from time to time to an offsite information retrieval and retransmission system. Since the distance between this information retrieval and retransmission system and the medication event detection system of this invention is not known, there might be the need to provide the detection systems' wireless communication module with quite a high level of transmitted RF or optical power.

An alternative is to store all information in the unitary system processor memory until all of the unit doses of medication have been dispensed or the medication regimen has come to a close. The patient can then place the used detector-processor unit together with its flexible substrate into a container or receptacle which is stored at a location conducive to effective transmission of data, such as for example a location in the patient's home, which is combined with the information retrieval and retransmission system.

## Claims

1. An electrical-signal-providing label system (200, 300) for detecting a physical accessing event involving, an object comprising a conformable tablet (100) for attachment to the object, wherein the label is attached to the object in a locations selected to receive a second-layer deforming compressive force when the object is accessed, and an electrical detection circuit connected to the label at connection points on the label,
said label comprising a stack of layers and an adhesive coating,
the stack of layers comprising first, second and third layers,
the first and third layers each comprising flexible, conformable, electrically conductive or semiconductive material and each comprising an electrical contact point for connection Into the electrical circuit,
the second layer comprising a flexible, deformable and compressible material, said second layer being electrically nonconductive or electrically conductive but less conductive than the first and third layers, said second layer separating said first and third layers.

2. The electrical-signal-providing label system of claim 1 wherein the second payer is electrically nonconductive.

3. The electrical-signal-providing label system of claim 1 wherein the second layer is electrically conductive.

4. The electrical-signal-providing label system of claim 1 wherein-the second layer has an initial configuration before receiving a second-layer-deforming compressive force and a second configuration when receiving the second-layer-deforming compressive force and a third configuration after receiving the second layer-deforming compressive force and wherein the initial configuration and the third configuration are substantially indistinguishable.

5. The electrical-signal-providing label system of claim 1 wherein the second layer has an initial configuration before receiving a second-layer-deforming compressive force and a second configuration when receiving the second-layer-deforming compressive force and a third configuration after receiving the second-layer-deforming compressive force and wherein the initial configuration and the third configuration are distinguishable.

6. The electrical-signal-providing label system of claim 1 wherein one or both of the first and third layers comprise more than one electrical contact points for connection Into an electrical circuit

7. Use of a conformable label (100) to provide an electrical signal indicative of the status of an object to which the label is affixed, when the label is connected to an electrical detection circuit,
said label comprising a stack of layers (10, 12, 14) and an adhesive coating (22),
the stack of layers comprising first (10), second (12) and third (14) layers,
the first (10) and third (14) layers having a conductivity of at least 10⁻³ S/M each comprising flexible, conformable, electrically conductive or semiconductive material and each comprising an electrical contact point for connection into the electrical circuit,
the second layer (12) comprising a flexible, deformable and compressible material,
said second layer being electrically nonconductive or electrically conducive but less conductive than the first and third layers, said second layer separating said first and third layers, wherein the label is attached to the object in a location selected to receive a second-layer deforming compressive force when the object is accessed,

8. The use of claim 7 including
detecting a first output signal across the first and third layers with the label in place attached to the object and no access to the object having been achieved,
detecting a second output signal across the first and third layers, said first and second output signals being similar to each other if no access to the object has been achieved and said first and second output signals differing from one another in a characteristic way if the object has been accessed.

9. The use of claim 7 including
feeding a first fed electrical signal across the first and third layers,
detecting a first output signal across the first and third layers with the label in place attached to the object an no access to the object having been achieved,
feeding a second fed electrical signal across the first and third layers with the label in place,
detecting a second output signal across the first and third layers, said first and second output signals being similar to each other if no access to the object has been achieved and said first and second output signals differing from one another in a characteristic way if the object has been accessed.

10. The use of claim 7 including for detecting physical accessing events involving first and second objects wherein the label is attached to the first and second objects.

11. The use of claim 10 including
detecting a first output signal across the first and third layers with the label in place attached to the first and second objects and no access to the first and second objects having been achieved,
detecting a second output signal across the first and third layers, said first and second output signals being similar to each other if no access to the first and second objects has been achieved and said first and second output signals differing from one another in a characteristic way if the first object has been accessed and differing from one another in a characteristic way if the second object has been accessed, and differing from one another in a characteristic way if the first and second objects have both been accessed.

12. The use of claim 7 for detecting the dispensing of a dose of medication from a container to a patient wherein the label is attached to the container.

13. The use of claim 12 including
detecting a first output signal across the first and third layers with the label in place attached to the container and no dispensing of a dose of medication from the container to the patient having been achieved,
detecting a second output signal across the first an third layers, said first and second output signals being similar to each other if no dispensing of a dose of medication from the container to the patient has been achieved and said first and second output signals differing from one another in a characteristic way if the dispensing of a dose of medication from the container to the patient has been achieved.

14. The use of claim 7 for detecting the dispensing of a series of doses of medication from a container to a patient wherein the label is attached to the container.

15. The use of claim 14 including
feeding a first fed electrical signal across the first and third layers,
detecting a first output signal across the first and third layers with the label in place attached to the container and no dispensing of a dose of medication from the container to the patient having been achieved,
feeding a second fed electrical signal across the first and third layers with the label in place,
detecting a second output signal across the first and third layers, said first and second output signals being similar to each other if no dispensing of a dose of medication from the container to the patient has been achieved and said first and second output signals differing from one another in a characteristic way if dispensing of a dose of medication from the container to the patient has occurred,
over a period of time feeding a sequence of additional fed electrical signals across the first and third layers with the label In place, and
over the period of time detecting a sequence of additional output signals across the first and third layers, said additional output signals being similar to the second output signal If no additional dispensings of a dose of medication from the container to the patient have occurred and the additional output signals differing from the second output signal in a characteristic way if a second dispensing of a dose of medication from the container to the patient has taken place and differing from one another in a characteristic way if yet additional dlspensings of a dose of medication from the container to the patient have taken place.

## Patentansprüche

1. Elektronisches Signal zur Verfügung stellendes Etikettiersystem (200, 300) für ein Detektieren eines physischen Zugriffsereignisses, beinhaltend ein Objekt, dass ein konformes Etikett (100) für das Anbringen an dem Objekt umfasst, wobei das Etikett an dem Objekt an einer Stelle angebracht ist, die ausgewählt ist, einer eine zweite Schicht deformierende Druckkraft ausgesetzt zu sein wenn auf das Objekt zugegriffen wird, und einen elektrischen Detektionsstromkreis, der mit dem Etikett an einem Anschlusspunkt auf dem Etikett verbunden ist,
wobei das genannte Etikett einen Schichtstapel und eine Klebebeschichtung umfasst,
wobei der Schichtstapel erste, zweite und dritte Schichten umfasst,
wobei die ersten und dritten Schichten jeweils flexible, konforme, elektrisch leitende oder halbleitende Materialien umfassen und jede einen elektrischen Anschlusspunkt zum Anschluss an den elektrischen Stromkreis umfassen,
und wobei die zweite Schicht ein flexibles, deformierbares und komprimierbares Material umfasst, wobei die genannte zweite Schicht elektrisch nicht leitend oder elektrisch leitend ist, aber weniger leitend als die ersten und dritten Schichten, wobei die genannte zweite Schicht die ersten und dritten Schichten trennt.

2. Elektronisches Signal zur Verfügung stellendes Etikettiersystem nach Anspruch 1, wobei die zweite Schicht elektrisch nicht leitend ist.

3. Elektronisches Signal zur Verfügung stellendes Etikettiersystem nach Anspruch 1, wobei die zweite Schicht elektrisch leitend ist.

4. Elektronisches Signal zur Verfügung stellendes Etikettiersystem nach Anspruch 1, wobei die zweite Schicht eine ursprüngliche Konfiguration vor dem Ausgesetztsein einer eine zweite Schicht deformierende Druckkraft und eine zweite Konfiguration bei dem Ausgesetztsein der eine zweite Schicht deformierende Druckkraft und eine dritte Konfiguration nach dem Ausgesetzt sein der eine zweite Schicht deformierenden Druckkraft aufweist und wobei die ursprüngliche Konfiguration und die dritte Konfiguration im Wesentlichen ununterscheidbar sind.

5. Elektronisches Signal zur Verfügung stellendes Etikettiersystem nach Anspruch 1, wobei die zweite Schicht eine ursprüngliche Konfiguration vor dem Ausgesetztsein einer eine zweite Schicht deformierende Druckkraft und eine zweite Konfiguration bei dem Ausgesetztsein der eine zweite Schicht deformierende Druckkraft und eine dritte Konfiguration nach dem Ausgesetzt sein der eine zweite Schicht deformierenden Druckkraft aufweist und wobei die ursprüngliche Konfiguration und die dritte Konfiguration im Wesentlichen unterscheidbar sind.

6. Elektronisches Signal zur Verfügung stellendes Etikettiersystem nach Anspruch 1, wobei eine oder beide der ersten und dritten Schichten mehr als einen elektrischen Anschlusspunkt für den Anschluss an einen elektrischen Stromkreis umfassen.

7. Verwendung eines konformen Etiketts (100), um ein elektrisches Signal zur Verfügung zu stellen, das den Status eines Objekts, an dem das Etikett angebracht ist, anzeigt, wenn das Etikett an einen elektrischen Detektionsstromkreis angeschlossen ist,
wobei das genannte Etikett einen Schichtstapel (10, 12, 14) und eine Klebstoffbeschichtung (22) umfasst,
der Schichtstapel erste (10), zweite (12) und dritte (14) Schichten umfasst,
wobei die erste (10) und dritte (14) Schichten eine Leitfähigkeit von mindestens 10⁻³ S/M aufweisen, wobei jede flexible, konforme, elektrisch leitende oder halbleitende Materialien umfassen und jede einen elektrischen Anschlusspunkt zum Anschluss an den elektrischen Stromkreis umfassen,
wobei die zweite Schicht (12) ein flexibles, deformierbares und komprimierbares Material umfasst,
und wobei die genannte zweite Schicht elektrisch nicht leitend oder elektrisch leitend ist, aber weniger leitend als die ersten und die dritten Schichten, wobei die genannte zweite Schicht die genannte erste und die genannten dritten Schichten trennt, wobei das Etikett an dem Objekt an einer Stelle angebracht ist, die so ausgewählt ist, dass es einer eine zweite Schicht deformierende Druckkraft ausgesetzt ist, wenn auf das Objekt zugegriffen wird.

8. Verwendung nach Anspruch 7, beinhaltend
Detektieren eines ersten Ausgangssignals zwischen den ersten und dritten Schichten des Etiketts an der Stelle, an der es am Objekt angebracht ist und kein Zugriff auf das Objekt stattgefunden hat,
Detektieren eines zweiten Ausgangssignal zwischen den ersten und dritten Schichten, wobei die genannten ersten und zweiten Ausgangssignale ähnlich zueinander sind, wenn kein Zugriff auf das Objekt stattgefunden hat, und die genannten ersten und zweiten Ausgangssignale sich voneinander auf eine charakteristische Weise unterscheiden, wenn auf das Objekt zugegriffen wurde.

9. Verwendung nach Anspruch 7, beinhaltend
Einspeisen eines ersten elektrischen Einspeisesignals zwischen den ersten und dritten Schichten,
Detektieren eines ersten Ausgangssignals zwischen den ersten und dritten Schichten des Etiketts an der Stelle, an der es am Objekt angebracht ist, und kein Zugriff auf das Objekt stattgefunden hat,
Einspeisen eines zweiten elektrischen Einspeisesignals zwischen den ersten und dritten Schichten an der Stelle, an der das Etikett angebracht ist,
Detektieren eines zweiten Ausgangssignals zwischen den ersten und dritten Schichten, das genannte erste und zweite Ausgangssignal sind ähnlich zueinander, wenn kein Zugriff auf das Objekt stattgefunden hat und die genannten ersten und zweiten Ausgangssignale unterscheiden sich voneinander auf eine charakteristische Weise, wenn auf das Objekt zugegriffen wurde.

10. Verwendung nach Anspruch 7, beinhaltend für das Detektieren eines physischen Zugriffsereignisses das Einschließen von ersten und zweiten Objekten, wobei das Etikett an den ersten und zweiten Objekten angebracht ist.

11. Verwendung nach Anspruch 10, beinhaltend
Detektieren eines ersten Ausgangssignals zwischen den ersten und dritten Schichten des Etiketts an der Stelle, an der es am Objekt angebracht ist, und kein Zugriff auf die ersten und zweiten Objekte stattgefunden hat,
Detektieren eines zweiten Ausgangssignals zwischen den ersten und dritten Schichten, wobei die genanten ersten und zweiten Ausgangssignale zueinander ähnlich sind, wenn kein Zugriff auf die ersten und zweiten Objekte stattgefunden hat und die genannten ersten und zweiten Ausgangssignale sich voneinander auf eine charakteristische Weise unterscheiden, wenn auf das erste Objekt zugegriffen worden ist und sich auf eine charakteristische Art voneinander unterscheiden, wenn auf das zweite Objekt zugegriffen worden ist und sich voneinander auf eine charakteristische Art unterscheiden, wenn auf beide, das erste und das zweite, Objekt zugegriffen worden ist.

12. Verwendung nach Anspruch 7 für das Detektieren der Abgabe einer Dosis einer Medikationsform an einen Patienten, wobei das Etikett an dem Behälter angebracht ist.

13. Verwendung nach Anspruch 12, beinhaltend
Detektieren eines ersten Ausgangssignals zwischen den ersten und dritten Schichten des Etiketts an der Stelle, an der es am Behälter angebracht ist, und kein Abgeben einer Dosis einer Medikationsform aus dem Behälter an den Patienten stattgefunden hat,
Detektieren eines zweiten Ausgangssignals zwischen den ersten und dritten Schichten, wobei die genannten ersten und zweiten Ausgangssignale zueinander ähnlich sind, wenn kein Abgeben einer Dosis einer Medikationsform aus dem Behälter an den Patienten stattgefunden hat und wobei die genannten ersten und zweiten Ausgangssignale sich voneinander auf eine charakteristische Art unterscheiden, wenn ein Abgeben einer Dosis einer Medikationsform aus dem Behälter an den Patienten stattgefunden hat.

14. Verwendung nach Anspruch 7 für das Detektieren der Abgabe einer Serie von Dosierungen einer Medikationsform von einem Behälter an einen Patienten, wobei das Etikett an dem Behälter angebracht ist.

15. Verwendung nach Anspruch 14, beinhaltend
Einspeisen eines ersten elektrischen Einspeisesignals zwischen den ersten und dritten Schichten,
Detektieren eines ersten Ausgangssignals zwischen den ersten und dritten Schichten des Etiketts an der Stelle, an der es am Behälter angebracht ist, und kein Abgeben einer Dosis einer Medikationsform aus dem Behälter an den Patienten stattgefunden hat,
Einspeisen eines zweiten elektrischen Einspeisesignals zwischen den ersten und dritten Schichten an der Stelle, an der das Etikett angebracht ist,
Detektieren eines zweiten Ausgangssignals zwischen den ersten und dritten Schichten, wobei die ersten und dritten Ausgangssignale zueinander ähnlich sind, wenn kein Abgeben einer Dosis einer Medikationsform aus dem Behälter an den Patienten stattgefunden hat und die genannten ersten und zweiten Ausgangssignale sich voneinander auf eine charakteristische Art unterscheiden, wenn ein Abgeben einer Dosis einer Medikationsform aus dem Behälter an den Patienten stattgefunden hat,
über einen Zeitraum Einspeisen einer Sequenz von zusätzlichen elektrischen Einspeisesignalen zwischen den ersten und dritten Schichten an der Stelle, an der das Etikett angebracht ist, und
über eine Zeitspanne Detektieren einer Sequenz von zusätzlichen Ausgangssignalen zwischen den ersten und dritten Schichten, wobei die genannten zusätzlichen Ausgangssignale zu dem zweiten Ausgangssignal ähnlich sind, wenn kein zusätzliches Abgeben einer Dosis einer Medikationsform aus dem Behälter an den Patienten stattgefunden hat und die zusätzliche Ausgangssignale sich von dem zweiten Ausgangssignal auf eine charakteristische Art unterscheiden, wenn ein zweites Abgeben einer Dosis einer Medikationsform aus dem Behälter an den Patienten stattgefunden hat und sich von einander auf eine charakteristische Art unterscheiden, wenn noch zusätzliches Abgeben einer Dosis einer Medikationsform aus dem Behälter an den Patienten stattgefunden hat.

## Revendications

1. Système d'étiquette délivrant un signal électrique (200, 300) pour détecter un événement d'accès physique impliquant un objet comprenant une étiquette conformable (100) pour une fixation à l'objet, dans lequel l'étiquette est fixée à l'objet dans un emplacement choisi pour recevoir une force compressive déformant une deuxième couche lorsqu'il est accédé à l'objet, et un circuit de détection électrique connecté à l'étiquette en des points de connexion sur l'étiquette,
ladite étiquette comprenant une pile de couches et un revêtement adhésif,
la pile de couches comprenant une première, une deuxième et une troisième couche,
les première et troisième couches comprenant chacune un matériau électro-conducteur ou semi-conducteur flexible conformable et chacune comprenant un point de contact électrique pour une connexion dans le circuit électrique,
la deuxième couche comprenant un matériau flexible, déformable et compressible, ladite deuxième couche étant électriquement non conductrice ou électriquement conductrice, mais moins conductrice que les première et troisième couches, ladite deuxième couche séparant lesdites première et troisième couches.

2. Système d'étiquette délivrant un signal électrique selon la revendication 1, dans lequel la deuxième couche est électriquement non conductrice.

3. Système d'étiquette délivrant un signal électrique selon la revendication 1, dans lequel la deuxième couche est électriquement conductrice.

4. Système d'étiquette délivrant un signal électrique selon la revendication 1, dans lequel la deuxième couche a une configuration initiale avant réception d'une force compressive déformant la deuxième couche et une deuxième configuration à réception de la force compressive déformant la deuxième couche et une troisième configuration après réception de la force compressive déformant la deuxième couche et dans lequel la configuration initiale et la troisième configuration sont substantiellement non distinguables.

5. Système d'étiquette délivrant un signal électrique selon la revendication 1, dans lequel la deuxième couche a une configuration initiale avant réception d'une force compressive déformant la deuxième couche et une deuxième configuration à réception de la force compressive déformant la deuxième couche et une troisième configuration après réception de la force compressive déformant la deuxième couche et dans lequel la configuration initiale et la troisième configuration sont distinguables.

6. Système d'étiquette délivrant un signal électrique selon la revendication 1, dans lequel une ou les deux des première et troisième couches comprennent plus d'un point de contact électrique pour une connexion dans un circuit électrique.

7. Utilisation d'une étiquette conformable (100) pour délivrer un signal électrique indicateur du statut d'un objet auquel l'étiquette est fixée, lorsque l'étiquette est connectée à un circuit de détection électrique,
ladite étiquette comprenant une pile de couches (10, 12, 14) et un revêtement adhésif (22),
la pile de couches comprenant une première (10), une deuxième (12) et une troisième (14) couche,
les première (10) et troisième (14) couches ayant une conductivité d'au moins 10⁻³ S/m chacune comprenant un matériau électro-conducteur ou semi-conducteur flexible conformable et chacune comprenant un point de contact électrique pour une connexion dans le circuit électrique,
la deuxième couche (12) comprenant un matériau flexible, déformable et compressible,
ladite deuxième couche étant électriquement non conductrice ou électriquement conductrice, mais moins conductrice que les première et troisième couches, ladite deuxième couche séparant lesdites première et troisième couches, dans laquelle l'étiquette est fixée à l'objet en un emplacement choisi pour recevoir une force compressive déformant la deuxième couche lorsqu'il est accédé à l'objet.

8. Utilisation selon la revendication 7 incluant
la détection d'un premier signal de sortie entre les première et troisième couches avec l'étiquette en place fixée à l'objet et aucun accès à l'objet n'ayant été effectué,
la détection d'un deuxième signal de sortie entre les première et troisième couches, lesdits premier et deuxième signaux de sortie étant semblables l'un à l'autre si aucun accès à l'objet n'a été effectué, et lesdits premier et deuxième signaux de sortie différant l'un de l'autre d'une manière caractéristique s'il a été accédé à l'objet.

9. Utilisation selon la revendication 7 incluant
l'alimentation d'un premier signal électrique alimenté entre les première et troisième couches,
la détection d'un premier signal de sortie entre les première et troisième couches avec l'étiquette en place fixée à l'objet et aucun accès à l'objet n'ayant été effectué,
l'alimentation d'un deuxième signal électrique alimenté entre la première et la troisième couches avec l'étiquette en place,
la détection d'un deuxième signal de sortie entre les première et troisième couches, lesdits premier et deuxième signaux de sortie étant semblables l'un à l'autre si aucun accès à l'objet n'a été effectué, et lesdits premier et deuxième signaux de sortie différant l'un de l'autre d'une manière caractéristique s'il a été accédé à l'objet.

10. Utilisation selon la revendication 7 incluant la détection d'événements d'accès physique impliquant un premier et un deuxième objet dans laquelle l'étiquette est fixée aux premier et deuxième objets.

11. Utilisation selon la revendication 10 incluant
la détection d'un premier signal de sortie entre les première et troisième couches avec l'étiquette en place fixée aux premier et deuxième objets et aucun accès aux premier et deuxième objets n'ayant été effectué,
la détection d'un deuxième signal de sortie entre les première et troisième couches, lesdits premier et deuxième signaux de sortie étant semblables l'un à l'autre si aucun accès aux premier et deuxième objets n'a été effectué, et lesdits premier et deuxième signaux de sortie différant l'un de l'autre d'une manière caractéristique s'il a été accédé au premier objet, et différant l'un de l'autre d'une manière caractéristique s'il a été accédé au deuxième objet, et différant l'un de l'autre d'une manière caractéristique s'il a été accédé aux deux des premier et deuxième objets.

12. Utilisation selon la revendication 7 pour détecter la délivrance d'une dose de médicament d'un récipient à un patient dans laquelle l'étiquette est fixée au récipient.

13. Utilisation selon la revendication 12 incluant
la détection d'un premier signal de sortie entre les première et troisième couches avec l'étiquette en place fixée au récipient et aucune délivrance d'une dose de médicament du récipient au patient n'ayant été effectuée,
la détection d'un deuxième signal de sortie entre les première et troisième couches, lesdits premier et deuxième signaux de sortie étant semblables l'un à l'autre si aucune délivrance d'une dose de médicament du récipient au patient n'a été effectuée, et lesdits premier et deuxième signaux de sortie différant l'un de l'autre d'une manière caractéristique si la délivrance d'une dose de médicament du récipient au patient a été effectuée.

14. Utilisation selon la revendication 7 pour détecter la délivrance d'une série de doses de médicament d'un récipient à un patient dans laquelle l'étiquette est fixée au récipient.

15. Utilisation selon la revendication 14 incluant
l'alimentation d'un premier signal électrique alimenté entre les première et troisième couches,
la détection d'un premier signal de sortie entre les première et troisième couches avec l'étiquette en place fixée au récipient et aucune délivrance d'une dose de médicament du récipient au patient n'ayant été effectuée,
l'alimentation d'un deuxième signal électrique alimenté entre les première et troisième couches avec l'étiquette en place,
la détection d'un deuxième signal de sortie entre les première et troisième couches, lesdits premier et deuxième signaux de sortie étant semblables l'un à l'autre si aucune délivrance d'une dose de médicament du récipient au patient n'a été effectuée, et lesdits premier et deuxième signaux de sortie différant l'un de l'autre d'une manière caractéristique si la délivrance d'une dose de médicament du récipient au patient a eu lieu,
l'alimentation, sur une période de temps, d'une séquence de signaux électriques alimentés additionnels entre les première et troisième couches avec l'étiquette en place, et
la détection, sur la période de temps, d'une séquence de signaux de sortie additionnels entre les première et troisième couches, lesdits signaux de sortie additionnels étant semblables au deuxième signal de sortie si aucune délivrance additionnelle d'une dose de médicament du récipient au patient n'a eu lieu, et les signaux de sortie additionnels différant du deuxième signal de sortie d'une manière caractéristique si une deuxième délivrance d'une dose de médicament du récipient au patient a eu lieu, et différant les uns des autres d'une manière caractéristique si des délivrances additionnelles d'une dose de médicament du récipient au patient ont encore eu lieu.
